**Europäisches Patentamt**

**European Patent Office**

**Office européen des brevets**

(19)

(11) Veröffentlichungsnummer : **0 374 367 B1**

(12)

# EUROPÄISCHE PATENTSCHRIFT

(45) Veröffentlichungstag der Patentschrift :
04.11.92 Patentblatt 92/45

(51) Int. Cl.⁵ : **F24J 2/24, F24J 2/46**

(21) Anmeldenummer : **89115598.8**

(22) Anmeldetag : **24.08.89**

(54) **Solarkollektor.**

(30) Priorität : **22.12.88 EP 88121461**

(43) Veröffentlichungstag der Anmeldung :
**27.06.90 Patentblatt 90/26**

(45) Bekanntmachung des Hinweises auf die
Patenterteilung :
**04.11.92 Patentblatt 92/45**

(84) Benannte Vertragsstaaten :
**AT BE CH DE ES FR GB GR IT LI NL**

(56) Entgegenhaltungen :
**WO-A-81/00614**
**DE-A- 1 751 723**
**DE-A- 2 741 983**
**DE-A- 3 032 096**
**DE-U- 8 709 710**

(56) Entgegenhaltungen :
**GB-A- 2 099 984**
**GB-A- 2 115 136**
**US-A- 4 213 450**
**US-A- 4 217 887**
**US-A- 4 310 182**
**US-A- 4 709 689**
**US-A- 4 718 404**

(73) Patentinhaber : **Roos, Franz**
**Am Eichwald 1**
**W-6472 Altenstadt-Waldsiedlung (DE)**

(72) Erfinder : **Roos, Franz**
**Am Eichwald 1**
**W-6472 Altenstadt-Waldsiedlung (DE)**

(74) Vertreter : **Müller-Wolff, Thomas Dipl.-Ing. et al**
**Industriestrasse 27**
**W-6472 Altenstadt (DE)**

EP 0 374 367 B1

Jouve, 18, rue Saint-Denis, 75001 PARIS

## Beschreibung

Die Erfindung betrifft einen Solarkollektor, dessen wärmeabsorbierende Fläche nahezu stufenlos bei variabler Formgebung weitgehend den jeweils gegebenen Erfordernissen anpaßbar wnd aus Hohlprofilen, insbesondere aus gespritztem Kunststoff- bzw. Kunststoffrippenrohren in tiefschwarzer Ausführung gebildet ist, wobei die entstandene Wärme durch Durchströmung eines Wärmeträgermediums, z.B. Wasser oder einer frostsicheren Flüssigkeit, abgeführt und einem Sammelbecken oder Speicher zugeführt wird, und der Transport des Wärmeträgers wahlweise durch Schwerkraft oder eine oder mehrere Förderpumpe(n) oder auch, bei Kombination beider Systeme, in einem mehrfachen Durchgang erfolgt, wobei die genannten Bauteile registerartig gegliedert sind.

In dem Solarkollektor wird aufgrund seiner absorbierenden schwarzen Fläche das Sonnenlicht in Wärme umgewandelt und wie erwähnt, durch einen flüssigen, in der Regel strömenden Wärmeträger aufgenommen.

Durch die WO-A-8100 614 ist ein Solarkollektor bekannt, dessen wärmeabsorbierende Fläche nahezu stufenlos bei möglicher variabler Formgebung weitgehend den jeweils gegebenen Erfordernissen anpaßbar und aus Rohren gebildet ist, wobei die entstandene Wärme durch Durchströmung eines Wärmeträgermediums, z.B. Wasser oder einer frostsicheren Flüssigkeit, abgeführt wnd einem Sammelbecken oder Speicher zugeführt wird, und der Transport des Wärmeträgers wahlweise durch Schwerkraft oder eine oder mehrere Förderpumpe(n) oder auch, bei Kombination beider Systeme, in einem mehrfachen Durchgang erfolgt, wobei die genannten Bauteile registerartig gegliedert sind. Die Zu- und Ablaufrohre 12 jedes Solarregisters sind über die vorgesehene Standardlänge mit Stecknippeln 16 bzw. Einsteckbohrungen für die Festlegung der Rohre in gleichmäßiger Teilung in geradliniger Reihe versehen, deren eine Längsbegrenzung durch das halbe Teilungsmaß begrenzt ist, während die gegenüberliegende Längsbegrenzung in einer Muffe 30 endet, deren Innendurchmesser mit dem Außendurchmesser der Zu- und Ablaufrohre korrespondiert und die einander zugeordneten Teile kraftschlüssig und/oder formschlüssig verbunden sind.

Bei Kollektoren aus Gummiprofilrohren oder Schläuchen können bei der Rückführung der Leitung aus dem Kollektor die zu- und abgangsseitigen Anschlüsse auf derselben Seite liegen.

Unabhängig davon besteht bei der Verwendung von Gummi eine äußerst eingeschränkte Stabilität, so daß im Interesse einer stabil bleibenden Lage der Verlegung heute dem gespritzten Hartkunststoff den Vorrang gegeben wird und aus diesem die Zu- und Abführleitungen, die Rippenrohre einschließlich des Montagezubehörs gefertigt werden.

Nachteilig ist, daß an den Verbindungsstellen der einzelnen Kollektoren relativ große freie Flächen entstehen, so daß die auf diesen auftreffende Sonnenenergie verloren geht. Es wird zwar versucht, diesen Nachteil dadurch auszugleichen, daß man die Zu- und Abführungsrohre entsprechend verlängert. Dies hat jedoch den Nachteil, daß es zu aufwendigen Transportproblemen kommen kann und die Rohre für viele Flächen zu groß dimensioniert sind oder auch die vorhandenen Flächen nicht ausreichend mit Kollektorflächen abdeckbar sind.

Auch die Montage dieser voluminösen Einsteckkollektoren kann aufgrund ihrer Größe zu Problemen führen, da zur Schaffung der notwendigen großen Flächen der Kollektor nicht nur breiter sondern auch länger und schwerer wird. Während bei Hohlprofilkollektoren die Zu- und Abführungsrohre und Verbindungsrohre komplett angeschweißt werden, werden den Rippenrohrkollektoren die einzelnen Rippenrohre entweder auf Nippel oder in Matten eingesteckt und durch Verschweißen oder Verkleben abgedichtet.

Damit wird eine erleichterte Montage vor Ort möglich, wobei allerdings die nicht gegebene Fortsetzungsmöglichkeit, ohne Vergrößerung der Teilung, zu langen Kollektoren führt.

Die registerähnlichen Rohr- und Rippenrohrkollektoren werden meistens nur gering befestigt auf der Unterlage fixiert, da der Wind weder starken Sog oder einen störenden Druck am Kollektor erzeugen kann.

Der aus einer Vielzahl parallel verlaufender Rohre bestehende Kollektor bildet die eigentliche Solarfläche. Um diese Rohre in etwa gleichem Abstand zu halten, verwendet man Abstandshalter aus gebogenem Draht oder auch aus gespritztem Kunststoff, z.B. in einzelnen Gabeln in vorbestimmtem Abstand nebeneinander stehend, die im unteren Teil miteinander verbunden sind.

Diese Lösung befriedigt jedoch nicht, da trotz der Abstandshalter der Kollektor labil ist und es zu Verwerfungen der Rohre usw. kommen kann, die sich in den Furchen bzw. Mulden, die durch Pergula, Dachziegel, Welleternit usw. nach oben hochwölben und dadurch die entstehende Eigenbeschattung des Kollektors und durch hochstehende, nicht durch Flüssigkeit beaufschlagte Rohre in ihrer Wirkung stark gemindert werden.

Unabhängig davon kommt es an diesen Stellen zu partiellen Hitzestaus und zu starken Materialbelästungen.

Diese Sachlage berücksichtigend ist es Aufgabe dieser Erfindung, ausgehend von dem zuletzt genannten Stand der Technik, einen Sonnenkollektor zu nennen, dessen Werkstoffauswahl eine befriedigende Stabilität der registerförmigen Einzelglieder sichert,dessen Montage in beliebiger Größe vor Ort durch Selbstbau vollzogen werden kann, bei dem die Einhaltung einer vorbestimmten Registerteilung für die die Zu- und Ablaufleitungen verbindenden Rohre bei Verbindung von Einzelkollektoren verschiedener Länge auf einfache Weise möglich ist, und bei dem der oder die Abstandshalter zwischen den Verbindungsrohren so ausgebildet sind, daß eine Hochwölbung des Registers vermieden wird.

Diese Aufgabe wird dadurch gelöst, daß die Zu- und Ablaufrohre jedes Solarregisters über die vorgesehene Standardlänge mit Stecknippen bzw. Einsteckbohrungen für die Festlegung der Rohre (4) in gleichmäßiger Teilung in geradliniger Reihe versehen sind, deren eine Längsbegrenzung durch das halbe Teilungsmaß begrenzt ist, während die gegenüberliegende Längsbegrenzung in einer Muffe endet, deren Innendurchmesser mit dem Außendurchmesser der Zu- und Ablaufrohre korrespondiert und die einander zugeordneten Teile kraftschlüssig und/oder formschlüssig verbunden sind, daß eine mit dem Durchmesser des Stecknippels versehene Nut die Einhaltung der vorgesehenen Teilung auch bei Verlängerung der Zu- und Ablaufrohre sichert, und daß der Abstand zwischen den Rippenrohren in ebener Lage durch vorgespannte Abstandshalter fixiert ist, daß die quer zu den Rippenrohren verlaufende Abstandshalter ein durchgehendes, gleichförmiges Profil aufweisen, das einen "L"-, "JL"-, "U"- oder "I"-förmigen Querschnitt besitzt, wobei die einzelnen Öffnungen der Rippenrohre etwas mehr als 180° kraftschlüssg, die Beigesteifigkeit des Steges erhaltend, gerundet sind, und daß für die stumpfe Verbindung von zwei glatten Stutzen eine Doppelmuffe, die im Abstand der Teilung einseitig offene Nuten für die Aufnahme der Stecknippel besitzt, vorgesehen ist.

Die bereits durch die Einleitung der Anmeldung bevorzugt vorgesehene Verwendung von gespritztem Kunststoff bzw. Kunststoffrippenrohren ist in diesem Fall von besonderer Bedeutung, da die Steifigkeit dieser Elemente eine partielle Montage vor Ort im Selbstbau zuläßt.

Hierbei ist durch die erfindungsgemäße Ausbildung der Rohrkonstruktion die Herstellung jeder Kollektorgröße möglich und die vorgespannte Abstandshalterung zwischen den einzelnen Rippenrohren verhindert eine Hochwölbung des Kollektors bzw. dessen wärmeabsorbierender Fläche.

Die kraftschlüssige Umfassung der Rippenrohre durch den oder die Stege des Profils sichert dessen Biegesteifigkeit, so daß eine konkave Wölbung des Kollektors in Richtung der Auflage nicht möglich ist.

Des weiteren ist es zweckmäßig, daß in den Muffen der Zu- bzw. Ablaufrohre am Ende der Nut noch eine Restlänge zur Verklebung oder Einbringung eines Dichtelementes vorgesehen ist.

Unabhängig davon können die Muffen und der glatte Stutzen durch geeignete Stopfen oder dergleichen Mittel verschlossen werden.

Ebenso ist es möglich, daß in die Zu- und Ablaufrohre ein Rohr korrespondierenden Durchmessers, gegebenenfalls anderer Qualität, eindichtbar oder verklebbar ist.

Diese Verbindung wird insbesondere dann aktuell, wenn die gespritzten Kunststoffrohre durch Metallrohre weitergeführt werden sollen.

Zur Anordnung und Festlegung der Rippenrohre wird bemerkt, daß die senkrecht zu den Zu- und Ablaufrohren in vorbestimmter Teilung verlaufenden Rippenrohre beidends durch eingedrückte Lippen-Dichtstopfen abgegrenzt sind, und

daß das Rippenrohr beidseitig den Stecknippeln aufgeschoben und die Verbindung zwischen Rippenrohr und Lippen-Dichtstopfen durch je eine übergeschobene Sicherungsmuffe mechanisch stabil gehalten wird, wobei es zweckmäßig ist, wenn die Sicherungsmuffe eine innenliegende, axial gerichtete, einseitig geschlossene Nut aufweist, in die Schweiß- oder Klebemittel eingebracht werden.

Der erfindungsgemäße Solarkollektor wird in beispielsweiser Ausführung durch die beigefügten Zeichnungen näher erläutert.

Figur 1 zeigt den Solarkollektor im Aufriß, aufbauend auf den jeweils einseitig, mit gegenüberliegend angeordneten Muffen versehenen Zu- und Ablaufrohren, den in gleicher Teilung über Stecknippel verbindende Rippenrohre und dem ein- oder mehrzahlig vorsehbaren Abstandshalter(n).

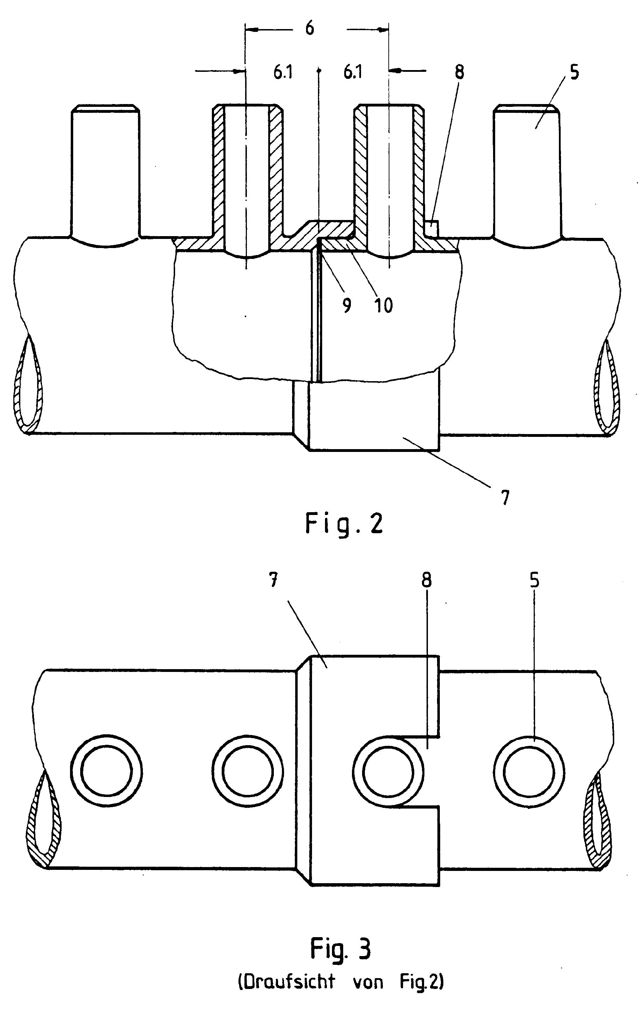

Figur 2 zeigt im Aufriß die Verbindung von zwei Zu- und Ablaufrohren über eine einseitig ausgebildete Muffe.

Figur 3 zeigt die Draufsicht dieser Verbindung aus Figur 2.

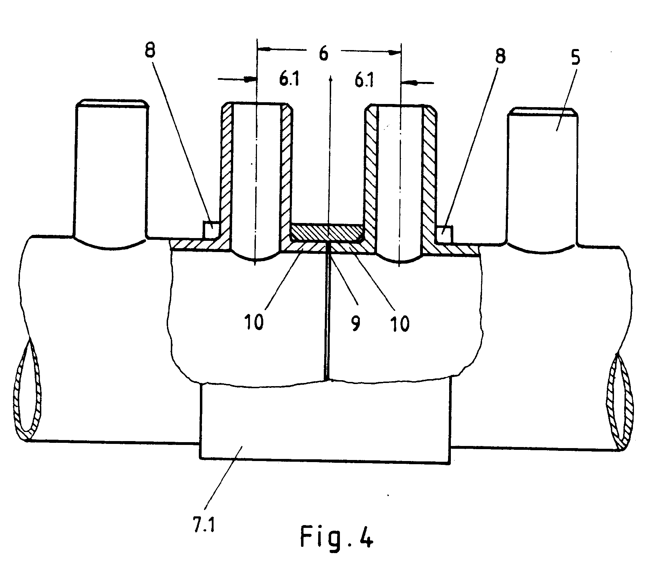

Figur 4 zeigt eine Doppelmuffe für die stumpfe Verbindung der Zu- und Ablaufrohre über deren freie Stutzen, die im Abstand der vorgesehenen Teilung zwei entgegengesetzt gerichtete Nuten zu deren Aufnahme aufweisen.

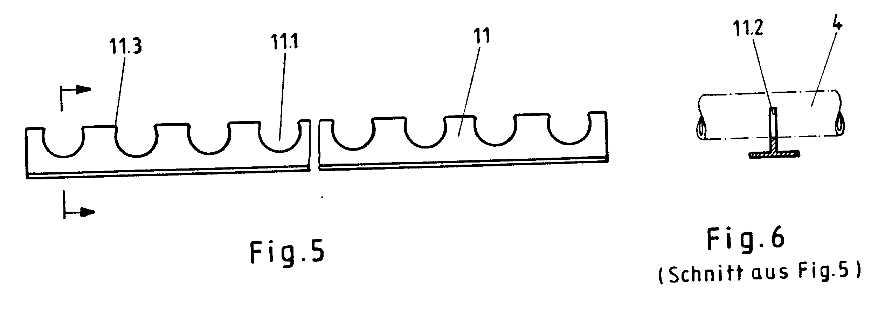

Figur 5 zeigt einen Abstandshalter für die Rippenrohre im Aufriß.

Figur 6 zeigt den Querschnitt durch Figur 5.

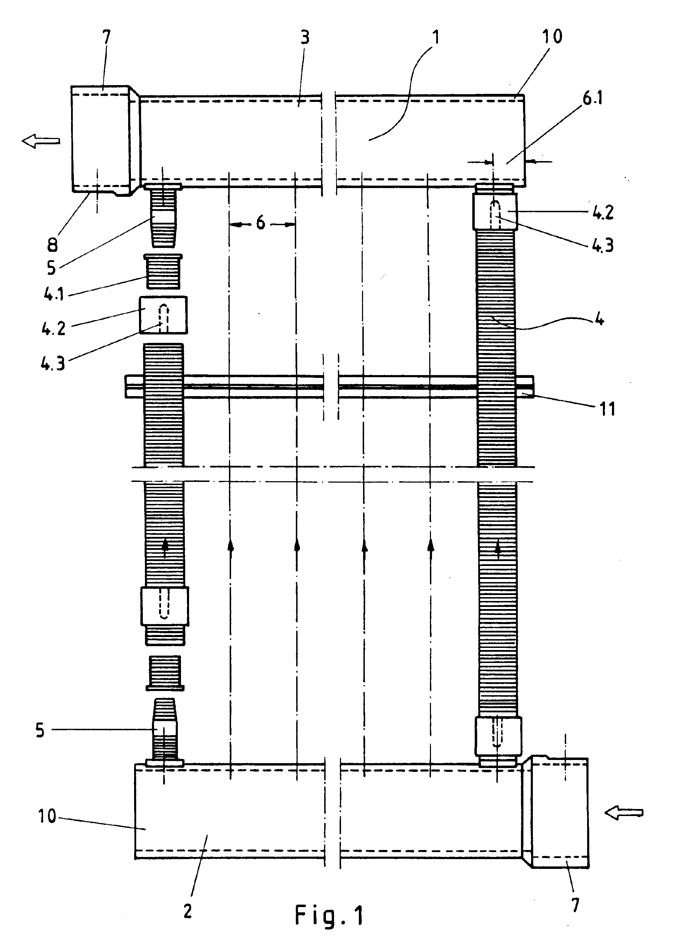

Die Gesamtdarstellung (Figur 1) des Solarkollektors 1 zeigt, untenliegend, das Zulaufrohr 2 und obenliegend das gleich dimensionierte Ablaufrohr 3, wobei die beiden Rohre 2/3 unter sich auswechselbar sind, und einseitig jeweils mit einer über die halbe Teilung hinaus sich erstreckenden Muffe 7 und andernends mit einem über die halbe Teilung 6.1 sich verlängernden Stutzens 10 versehen sind.

Die Rohre 2/3 und die Anschlußmuffe 7 sind ebenso wie die Stecknippel 5, die Rippenrohre 4, die Lippen-Dichtstopfen 4.1 und die jeweils mit einer Fixiernut 4.3 ausgestatteten Sicherungsmuffen 4.2 aus gespritztem Kunststoff hergestellt.

Die einheitliche Teilung 6 bzw. das halbe Teilungsmaß 6.1 ist für die Rohre korrespondierend hergestellt. Das gleiche gilt für die Zentren der Muffen 7 bzw. der Stutzen 10.

Für die Verbindung mit weiteren Solarkollektoren 1 über die Muffe 7 der Nut 8 und die Stutzen 10 ist vorgesehen, daß das Anschlagmaß für die Stecknippel 5 in der Nut 8 exakt die Fortsetzung der Teilung 6 für die Stecknippel 5 gewährleistet.

Es kann vorgesehen werden, daß die Nut 8 in Einsteckrichtung nach dem Anschlag des Stecknippels 5 eine Restlänge 9 freiläßt, die die Einbringung einer Dichtung oder zusätzlicher Dichtmassen erlaubt.

Des weiteren ist noch auf die Möglichkeit einer stumpfen Verbindung von zwei Zu- und Ablaufrohren 2/3 bzw. von glatten Stutzen 10 durch eine Doppelmuffe 7.1 zu verweisen.

Diese besitzt im Abstand ihrer Teilung 6 jeweils eine einseitig offene Nut für die Aufnahme der Stecknippel 5.

Den Rippenrohren 4 sind jweils zwei Sicherungsmuffen 4.2 aufgeschoben und beidends je ein Lippen-Dichtstopfen 4.1 mit Druck eingeschoben. Die Kombination 4.1/4 - 4/4.1 wird dann über die Stecknippel 5 geführt und die Sicherungsmuffen 4.2 über die Verbindungsstellen mit Druck aufgeschoben, wobei die innenliegende Nut 4.3 Kleber, Schweißmittel oder sonstige Verbindungsmittel aufnimmt.

Die Nut 4.3 ist jeweils in Richtung zum Stecknippel 5 geschlossen. Der Abstandshalter 11 zwischen den Rippenrohren 4 wird durch ein einheitl. Profil gebildet. dessen Öffnungen 11.1 jedes Steges 11.2 die Rippenrohre 4 mit Spannung um mindestens 180° umfassen, wobei zur Vermeidung von Verletzungen der Rippenrohre 4 beim Eindrücken die jeweils ebenen, beidseitigen Einführungskanten 11.3 leicht gerundet sind.

**Patentansprüche**

1. Solarkollektor (1), dessen wärmeabsorbierende Fläche nahezu stufenlos bei möglicher variabler Formgebung weitgehend den jeweils gegebenen Erfordernissen anpaßbar und aus Hohlprofilen, insbesondere aus gespritztem Kunststoff- bzw. Kunststoffrippenrohren (4) in tiefschwarzer Ausführung gebildet ist, wobei die entstandene Wärme durch Durchströmung eines Wärmeträgermediums, z.B. Wasser oder einer frostsicheren Flüssigkeit, abgeführt und einem Sammelbecken oder Speicher zugeführt wird, und der Transport des Wärmeträgers wahlweise durch Schwerkraft oder eine oder mehrere Förderpumpe(n) oder auch, bei Kombination beider Systeme, in einem mehrfachen Durchgang erfolgt, wobei die genannten Bauteile registerartig gegliedert sind, dadurch gekennzeichnet,

daß die Zu- und Ablaufrohre (2/3) jedes Solarregisters über die vorgesehene Standardlänge mit Stecknippeln (5) bzw. Einsteckbohrungen für die Festlegung der Rohre (4) in gleichmäßiger Teilung (6) in geradliniger Reihe versehen sind, deren eine Längsbegrenzung durch das halbe Teilungsmab begrenzt ist,

während die gegenüberliegende Längsbegrenzung in einer Muffe (7) endet, deren Innendurchmesser mit dem Außendurchmesser der Zu- und Ablaufrohre (2/3) korrespondiert und die einander zugeordneten Teile kraftschlüssig und/oder formschlüssig verbunden sind,

daß eine mit dem Durchmesser des Stecknippels (5) versehene Nut (8) die Einhaltung der vorgesehenen Teilung (6) auch bei Verlängerung der Zu- und Ablaufrohre (2/3) sichert, und daß der Abstand zwischen den Rippenrohren (4) in ebener Lage durch vorgespannte Abstandshalter (11) fixiert ist,

daß die quer zu den Rippenrohren (4) verlaufenden Abstandshalter (11) ein durchgehendes, gleichförmiges Profil aufweisen, das einen "L"-, "JL"-, "U"- oder "I"-förmigen Querschnitt besitzt, wobei die einzelnen Öffnungen (11.1) die Rippenrohre (4) etwas mehr als 180° kraftschlüssig, die Biegesteifigkeit des Steges (11.2) erhaltend, umschliessen und die Einführungskanten (11.3) gerundet sind, und

daß für die stumpfe Verbindung von zwei glatten Stutzen (10) eine Doppelmuffe (7.1), die im Abstand der Teilung (6) einseitig offene Nuten (8) für die Aufnahme der Stecknippel (5) besitzt, vorgesehen ist.

2. Solarkollektor nach Anspruch 1, dadurch gekennzeichnet,

daß in den Muffen (7) der Zu- bzw. Ablaufrohre (2/3) am Ende der Nut (8) noch eine Restlänge (9) zur Verklebung oder Einbringung eines Dichtelementes vorgesehen ist.

3. Solarkollektor nach Anspruch 1, dadurch gekennzeichnet,

daß die Muffe (7) und der glatte Stutzen (10) durch geeignete Stopfen oder dergleichen Mittel verschließbar sind.

4. Solarkollektor nach Anspruch 1, dadurch gekennzeichnet,

daß in die Zu- und Ablaufrohre (2/3) ein Rohr korrespondierenden Durchmessers, gegebenenfalls anderer Qualität, eindichtbar oder verklebbar ist.

5. Solarkollektor nach Anspruch 1, dadurch gekennzeichnet,

daß die senkrecht zu den Zu- und Ablaufrohren (2/3) in vorbestimmter Teilung (6) verlaufenden Rippenrohre (4) beidends durch eingedrückte Lippen-Dichtstopfen (4.1) abgegrenzt sind, und

**daß** das Rippenrohr (4) beidseitig den Stecknippeln (5) aufgeschoben und die Verbindung zwischen Rippenrohr (4) und Lippen-Dichtstopfen (4.1) durch je eine übergeschobene Sicherungsmuffe (4.2) mechanisch stabil gehalten wird.

6.  Solarkollektor nach Anspruch 5, dadurch gekennzeichnet,

    **daß** die Sicherungsmuffe (4.2) eine innenliegende, axial gerichtete, einseitig geschlossene Nut (4.3) aufweist, in die Schweiß- oder Klebemittel eingebracht werden.

**Claims**

1.  Solar collector (1) characterised by, whose heat absorbing surface can be adapted through variable shapes to the respective requirements and consists of jet black hollow shapes, especially extruded plastic resp. plastic finned pipes (4), whereby the resulting heat is removed by a heat carrying medium e.g. water or a frost-resistant medium flowing through the pipes and fed to a collecting tank or a reservoir, and the transport of the heat carrier is either gravitational or by one or more booster pumps or a combination of both systems, in a multiple tubing system, whereby the afore-mentioned copmponents are arranged as a register,

    that the inlet and outlet pipes (2/3) of each solar register possess over the standard length nipples (5) resp. sockets for mounting evenly spaced, the tubes (4) in straight rows, and one longitudinal end is limited by half of the dimension of division,

    whilst the opposite longitudinal end ends in a bushing (7), whose inner diameter corresponds with the outer diameter of the inlet and oulet pipes (2/3) and connects the respective parts tensionally and/or form-closed,

    that a groove (8) having a diameter of the nipple (5) ensures the retension of the pre-determined spacing (6) also during extending of the inlet and outlet pipes (2/3), and that the distance between the finned pipes (4) is fixed in a level position by use of a pre-stressed spacer (11),

    that the perpendicular to the finned tubes (4) spacer (11) exhibits an uniform shape, either a "L"-, "JL"-, "U"- or "I" shaped cross-section where the individual openings (11.1) surround the finned pipes (4) by more than 180°, retaining the bending strength of the side bar (11.2), and the edges (11.3) are rounded off, and

    that for the butt joining of two smooth sockets (10); a double bushing (7.1), having at a distance of the spacers (6) one sided open grooves (8) for receiving the nipple (5), is to be used.

2.  Solar collector after claim 1, characterised by

    that in the bushings (7) of the inlet and outlet pipes (2/3) at the end of the groove (8), a rest length (9) is provided for glueing or for the use of a sealing element.

3.  Solar collector after claim 1, characterised by

    that the bushings (7) and the smooth socket (10) can be closed by use of appropriate plugs or similar means.

4.  Solar collector after claim 1, characterised by

    that in the inlet and outlet pipes (2/3), a tube of corresponding diameter, eventually another quality, can be fitted or glued.

5.  Solar collector after claim 1, characterised by

    that the perpendicular to the inlet and outlet pipes (2/3) in pre-determined spacing (6), finned tubes (4) have at both ends ribbed sealing units (4.1), and that the finned tube (4) is pushed on both ends onto the nipples (5) and the joint between the finned tube (4) and ribbed sealing unit (4.1) is mechanically stabilised through use of a superimposed safety bush (4.2).

6.  Solar collector after claim 5, characterised by

    that the saftey bush (4.2) possesses an inner, axially orientated, closed at one end groove (4.3) into which welding or glueing medium can be inserted.

**Revendications**

1) Collecteur solaire (1) dont la surface absorbante de la chaleur, à configuration variable s'adapte de façon quasi continue aux conditions données et est composée de profilés creux, plus particulièrement de tubes en matière plastique injectée respectivement de tubes à ailettes circulaires (4) exécutés en noir foncé, la chaleur produite étant évacuée par circulation d'un agent caloporteur, par exemple eau ou liquide antigel, et transportée dans un réservoir collecteur ou accumulateur et la circulation de l'agent caloporteur s'effectue en passage répété, soit par gravité, soit à l'aide d'une ou de plusieurs pompes de circulation ou encore par combinaison des deux systèmes, les éléments précités étant structurés en registres, caractérisé en ce que,

les tubes d'amenée et de sortie (2/3) de chaque registre solaire sont équipés sur la longueur standard prévue de tubes de raccordement enfichables (5) resp. de douilles d'emmanchement pour la fixation à espace régulier (6) et en rangée rectiligne des tubes (4), et d'un côté leur longueur libre est limitée à un demi-espace d'écartement tandis que le bout opposé se termine par un manchon d'accouplement (7) dont le diamètre intérieur correspond au diamètre extérieur des tubes d'arrivée et de sortie (2/3) et les éléments correspondant l'un à l'autre sont raccordés en force et/ou par blocage mécanique, qu'une encoche (8) de même diamètre que celui du tube de raccordement enfichable (5) assure le maintien de l'espace d'écartement (6) même dans le cas de l'allongement des tubes d'arrivée et de sortie (2/3) et que l'écart entre les tubes à ailettes circulaires (4) est maintenu dans le même plan par des étriers précontraints (11), que les étriers précontraints (11) placés perpendiculairement aux tubes à ailettes circulaires (4) consistent en un profilé uniforme traversant de section en "L", "JL", "U", ou "I", chaque embrèvement semi-circulaire (11.1) maintenant les tubes à ailettes circulaires (4) en force sous un angle légèrement supérieur à 180°, assurant la rigidité flexionnelle de la traverse (11.2) et les arêtes d'étranglement (11.3) sont arrondies, et

que pour le raccordement bord à bord de deux tubulures lisses (10) un manchon double est prévu qui possède pour le logement des tubes de raccordement enfichables (5) des encoches de positionnement ouvertes d'un côté (8) espacées d'une distance égale à l'espace d'écartement (6).

2. Collecteur solaire selon la revendication 1 caractérisé en ce que dans les manchons (7) des tubes d'entrée et de sortie (2/3) une longueur de saillie (9) est prévue à l'extrémité de l'encoche (8) pour permettre le collage ou la pose d'un élément d'étanchéité.

3. Collecteur solaire selon la revendication 1 caractérisé en ce que le manchon (7) et la tubulure lisse (10) sont obturables par des brides d'obturation adéquates ou tout autre moyen similaire.

4. Collecteur solaire selon la revendication 1 caractérisé en ce que dans les tubes d'entrée et de sortie (2/3) un tube de diamètre correspondant, le cas échéant de qualité différente, peut y être encollé ou enfiché hermétiquement.

5. Collecteur solaire selon la revendication 1 caractérisé en ce que les tubes à ailettes circulaires (4) situés à un écartement donné (6) perpendiculairement aux tubes d'entrée et de sortie (2/3) sont limités à chaque extrémité par des bagues à lèvres pressées (4.1) et que le tube à ailettes circulaires (4) est engagé de part et d'autre sur les tubes de raccordement enfichables (5) et le raccordement entre le tube à ailettes circulaires (4) et la bague à lèvres (4.1) est maintenu mécaniquement stable par un manchon double de sûreté (4.2) coulissant.

6. Collecteur solaire selon la revendication 5, caractérisé en ce que

le manchon double de sûreté (4.2) comprend une rainure intérieure longitudinale obturée d'un côté (4.3) permettant l'introduction de substances de soudage ou de collage.

Fig. 1

Fig. 2

Fig. 3

(Draufsicht von Fig.2)

EP 0 374 367 B1

Fig. 4

9

EP 0 374 367 B1

Fig.5

Fig.6
(Schnitt aus Fig.5)